# EUROPEAN PATENT APPLICATION

(11) **EP 2 453 564 A1**
(43) Date of publication of application: **16.05.2012**
(21) Application number: 10190835.8
(22) Date of filing: 11.11.2010
(51) Int. Cl.: H02K 44/06

(54) **Liquid metal pump**

(71) Applicant: Holding Broeze Special Products B.V., 7442 CV Nijverdal (NL)
(72) Inventor: van Kalken, Daniel Johannes, 7775 AV, Lutten (NL)
(74) Representative: 't Jong, Bastiaan Jacob

(57) **Abstract**

The invention relates to a liquid metal pump for pumping hot liquid metals, like liquid aluminum, which pump comprises:
- a ceramic channel for transporting the liquid metal;
- at least one permanent magnet;
- driving means for driving the at least one permanent magnet along the outside of the ceramic channel in substantially the transport direction of the liquid metal.

## Description

The invention relates to a liquid metal pump for pumping hot liquid metals, like liquid aluminum.

Two types of pumps for pumping hot liquid metals are known in the state of the art.

The first known pump is a so called graphite pump. This pump has an impeller arranged in a pump housing. The liquid metal is fed to the pump housing and by rotating the impeller, the liquid metal is pumped out of the housing into a duct or the like. The disadvantage of such a known impeller type pump is the high wear rate of the pump. The pump has to be rebuild frequently and the impeller has to be renewed with every rebuild. This causes frequent production stops as the pump has to be removed and also high maintenance costs.

The second known type of pump is a electromagnetic pump. This kind of pump has a channel through which the hot liquid metal flows. By providing a magnetic field across the channel and by providing a high electrical current transverse to the magnetic field, the electrical conducting liquid metal is propelled in the channel resulting in a pumping action. The advantage of this second type of pump is that no moving parts are present in the pump resulting in a higher lifespan. However the cost of such a pump are high and also the operating costs are high due to the amount of electrical current used.

It is now an object of the invention to provide a liquid metal pump, in which the above mentioned disadvantages are reduced or even removed.

This object is achieved according to the invention with a pump comprising:
- a ceramic channel for transporting the liquid metal;
- at least one permanent magnet;
- driving means for driving the at least one permanent magnet along the outside of the ceramic channel in substantially the transport direction of the liquid metal.

A ceramic channel is heat resistant such that it can reliably transport liquid metal. Another characteristic of ceramic is the permeability for a magnetic field. Now by moving a permanent magnet along the outside of the ceramic channel, the liquid metal inside the channel is subjected to the moving magnetic field and propelled in the direction of the movement of the permanent magnet. This force for propelling the liquid metal is the result of the Lorentz forces generated by moving the magnetic field through an electrical conducting fluid.

As permanent magnets are used, only power is consumed for moving the magnet along the channel.

Preferably the ceramic channel is a straight elongate channel. Such a straight elongate channel is easily manufactured and can simply arranged in a liquid metal transport system. However curved channels could also be used for the invention.

In another preferred embodiment of the pump according to the invention the ceramic channel is made out of silicon nitride or an alloy of silicon nitride, like sialon. These materials have a good non wetting characteristic reducing the friction in the channel and also reducing the chance of liquid metal parts or oxides thereof sticking to the wall of the channel causing a buildup of material, which could eventually lead to clogging the channel.

As the driving means are arranged outside of the channel, the channel does not have to be disassembled when something has to be repaired to the pump according to the invention.

In yet another preferred embodiment of the pump according to the invention the driving means comprise a rotatable wheel to which the at least one permanent magnet is arranged and wherein the rotation axis of the wheel is perpendicular to transport direction of the liquid metal.

Preferably a plurality of permanent magnets is evenly distributed over the outer periphery of the wheel.

The liquid metal can now be pumped simply by rotating the wheel with the magnets. When the wheel rotates, the permanent magnets will move one after the other along the side of the channel propelling the liquid metal inside the channel.

By making the wheel rotatable in both directions, it is possible to pump the liquid metal in both ways through the channel simply by reversing the rotation direction of the wheel.

In still another preferred embodiment of the pump according to the invention the driving means comprise a second wheel arranged parallel to the first wheel and having the same rotation axis, wherein the second wheel is arranged on the opposite side of the ceramic channel and is also provided with at least one permanent magnet.

By having two wheels on opposite side of the channel, the propelling force of the magnets on to the liquid metal is increased. By magnetizing the magnets such that a linear magnetic field will occur between two opposing magnets of the two wheels, and thus a linear magnetic field is provided through the liquid metal, the driving force is further optimized. The linear magnetic field will cause that the metal over the cross section of the channel will be subjected to an equal force. This reduces the chance on turbulence within the liquid metal flow.

In yet another embodiment of the pump according to the invention the permanent magnets are made of samarium-cobalt alloys or alnico alloys. These type of magnets are highly heat resistant, such that additional cooling of the magnets is not necessary.

These and other features of the invention will be elucidated in conjunction with the accompanying drawings.
Figure 1 shows a schematic perspective view of an embodiment of the liquid metal pump according to the invention.
Figure 2 shows a cross sectional view of the pump according to figure 1.

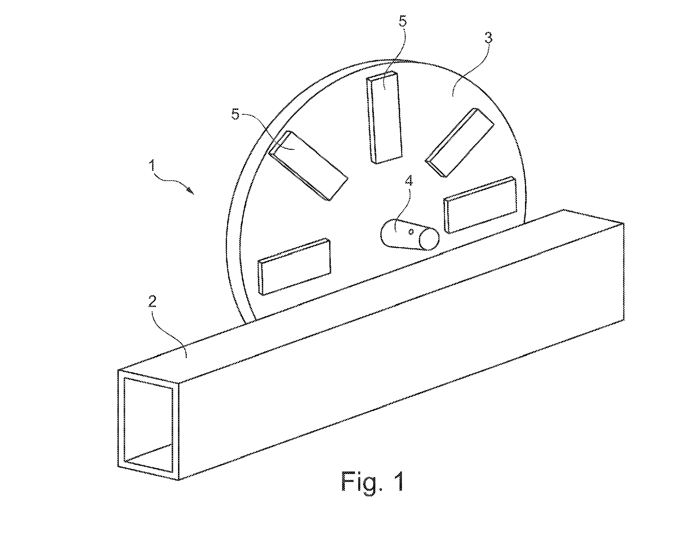

Figure 1 shows a liquid metal pump 1 according to the invention. The pump 1 has an elongate channel 2. This channel 2 has a rectangular cross section. Through this channel 2 hot liquid metal is transported.

A wheel 3 is arranged adjacent to the channel 2. This wheel 3 has a rotation axle 4 positioned just above the channel 2. A plurality of permanent magnets 5 are arranged on the side surface of the wheel 3. The magnets 5 have a rectangular shape and are arranged with the longitudinal axis in radial direction of the wheel 3. The magnets 5 are evenly distributed over the outer periphery of the wheel 3.

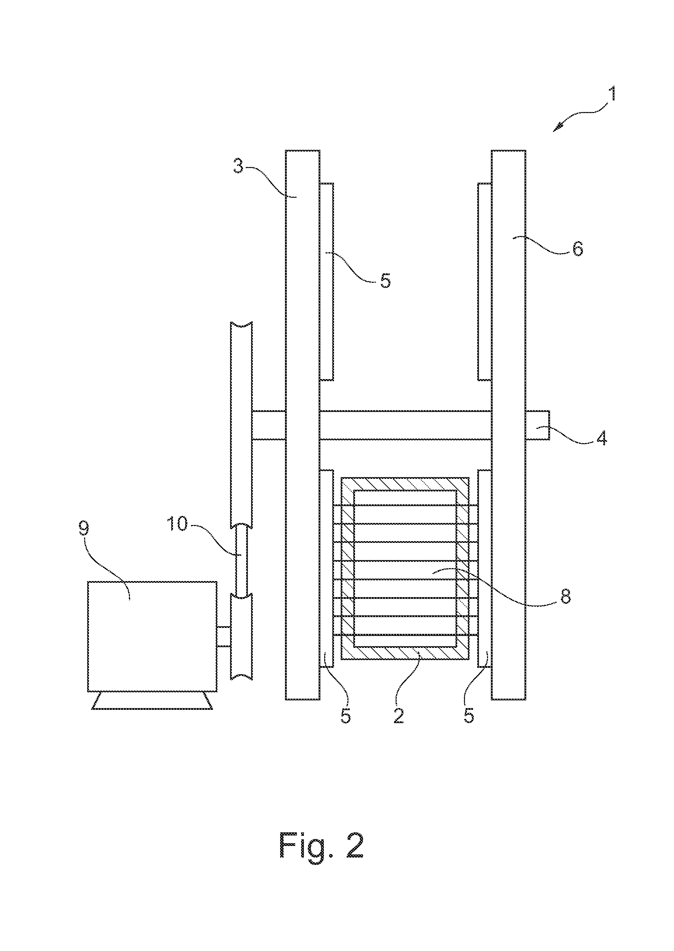

Figure 2 shows a cross sectional view of the pump 1 of figure 1. As is clear from this figure 2, a second wheel 6 is arranged on the opposite side of the channel 2. This second wheel 6 is arranged on the same axle 4. Furthermore, a same number of magnets 7 is arranged on the surface of the wheel 6. By having the magnets 5 and 7 directly opposite of each other, a linear magnetic field 8 is obtained, with which the hot liquid metal is propelled through the channel 2.

The axle 4 is driven by an electric motor 9 via a belt 10. Simply by reversing the rotation of the motor 9, the wheels 3, 6 will reverse direction, resulting in a reversed pumping action.

## Claims

1. Liquid metal pump for pumping hot liquid metals, like liquid aluminum, which pump comprises:
- a ceramic channel for transporting the liquid metal;
- at least one permanent magnet;
- driving means for driving the at least one permanent magnet along the outside of the ceramic channel in substantially the transport direction of the liquid metal.

2. Pump according to claim 1, wherein the ceramic channel is a straight elongate channel.

3. Pump according to claim 1 or 2, wherein the ceramic channel is made out of silicon nitride or an alloy of silicon nitride, like sialon.

4. Pump according to any of the preceding claims,
wherein the driving means comprise a rotatable wheel to which the at least one permanent magnet is arranged and wherein the rotation axis of the wheel is perpendicular to transport direction of the liquid metal.

5. Pump according to claim 4, wherein a plurality of permanent magnets is evenly distributed over the outer periphery of the wheel.

6. Pump according to claim 4 or 5, wherein the wheel is rotatable in both directions.

7. Pump according to any of the claims 4 - 6, wherein the driving means comprise a second wheel arranged parallel to the first wheel and having the same rotation axis, wherein the second wheel is arranged on the opposite side of the ceramic channel and is also provided with at least one permanent magnet.

8. Pump according to any of the preceding claims,
wherein the permanent magnets are made of samarium-cobalt alloys or alnico alloys.
